# EUROPEAN PATENT SPECIFICATION

(11) **EP 4 157 567 B1**
(45) Date of publication and mention of the grant of the patent: **09.12.2026**
(21) Application number: 21734924.0
(22) Date of filing: 31.05.2021
(51) Int. Cl.: F16P 3/00, F16P 3/14, B21D 5/04, B21D 5/02, B21D 5/00, B21D 55/00

(54) **CARRIAGE FOR A MACHINE TOOL INCLUDING AN ANTI-COLLISION SYSTEM**
SCHLITTEN FÜR EINE WERKZEUGMASCHINE MIT KOLLISIONSSCHUTZSYSTEM
CHARIOT POUR MACHINE-OUTIL COMPRENANT UN SYSTÈME ANTI-COLLISION

(30) Priority: 01.06.2020 IT 202000013021
(43) Date of publication of application: 05.04.2023
(73) Proprietor: G.A.D.E. S.r.l., 44033 Riva del Po (FE) (IT)
(72) Inventor: ASCARI, Silvestro, 44033 Riva del Po (FE) (IT)
(74) Representative: Leganza, Alessandro
(86) International application number: PCT/IB2021/054746
(87) International publication number: WO 2021/245528

(56) References cited:
- EP-A2- 0 995 543
- EP-A2- 2 301 706
- WO-A1-2011/160243
- WO-A1-2012/151600
- US-A1- 2016 214 159

## Description

### TECHNICAL FIELD

The present invention relates to devices mounted on carriage of the kind used to drive measuring devices during inline inspections of machining operations to be made with machine tools particularly with bending presses.

### BACKGROUND ART

Press brakes, also known as "bending presses" or "press benders" are machines used for bending a metal sheet. In summary, the piece to be bent is positioned on a die having a typical V-shaped profile and then wedge-shaped punches (usually named "knifes") push the piece against the V-die so that the sheet is bent for a certain length (named "bending length") along a direction (named "bending direction") defined by the orientation of the punches according to a predetermined angle (named "bending angle") defined by the shape of the die and the punches.

In press brakes, a key element is the control of the bending angle. Usually, the measurement of this fundamental machining parameter is performed by means of a camera or other devices for dimensional control (e.g. a laser system) suitably mounted on the machine.

In this regard, there are known bending angle control systems with fixed cameras. Unfortunately, such systems are not very precise especially when the bending press has a bending length of more than 4 meters. To overcome this limitation in recent years mobile camera systems have been introduced. In these systems a camera mounted on a carriage measures the bending angle while the carriage moves along a guide rail integral with the bending press and generally mounted parallel to the bending direction. In particular, there are known machine tools equipped with real time inspection devices based on laser cameras that measures the degree of bending while they move along the guide rail. In this case, such devices send a feedback signal to the control unit of the press brake to optimize the bending angle. Useful laser cameras for this purpose are, for example, those produced by Data-M.

Taking into account the performance level that is currently required in press-bending machining, the carriage with the camera must move at the highest possible speed to ensure optimum control of the bending profile. However, despite the high-level of automation press-bending machines equipped with real-time bending control systems still require a skilled operator, e.g. for loading/unloading metal sheets, bending operations supervision and quality check. Therefore, safety concerns require the speed of the carriage to comply with the specification set forth in the UNI EN 12445:2002 standard "*Industrial, commercial and garage doors and gates - Safety in use of power operated doors* - *Test methods*".

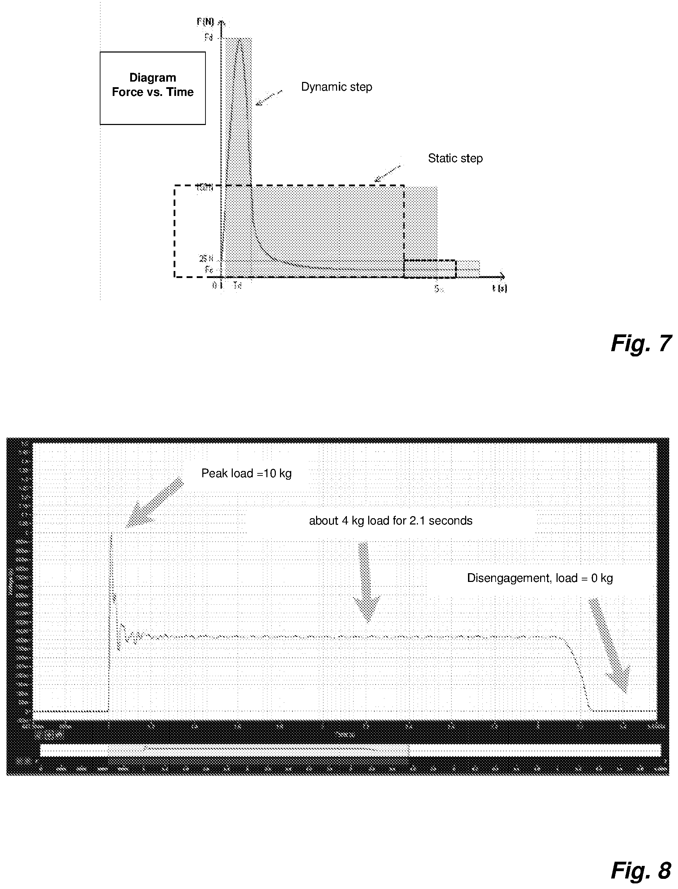

Particularly, this standard imposes a limit on the maximum speed of the carriage as the impact force during the collision must fit the diagram shown in the Figure 7 herein enclosed. In addition, for further safety the electric motor which imparts movement to the carriage must be equipped with a dynanometric clutch which in the event of a collision disengages the motor from the transmission components causing stop of the carriage.

According to the UNI EN12445 standard and considering the typical mass of a carriage used by the present applicant, the maximum speed of the carriage cannot exceed about 50 mm/s. Obviously, to increase the efficiency of the press brake it would be desirable to exceed this speed as long as adequate safety conditions for the operator and integrity of the machine are guaranteed. In fact, if the carriage collides with the operator's hand or limb serious injuries can be caused such as crushing trauma and tissue injuries, in particular to the delicate structures of the hand.

Furthermore, in the event of a malfunction of the machine, the control cameras can collide with other components of the press brake for example the so-called "registers" i.e. the components of the machine used to position the metal sheet at the appropriate height. Damages to registers and/or cameras cause considerable economic damage taking into account their rather high cost as well as the inevitable downtime necessary to repair the machine. These issues can occur when machining metal sheets having complex bends or in the event of a sensor read error or a machine set-up error.

According to the inventor's best knowledge, there are no anti-collision devices on the market suitable to prevent, or to mitigate, the effects of a collision between the carriage with a camera (or with other dimensional control device) mounted on it and the operator's hand and/or other machinery components.

EP 2 301 706 A2 disloses a known carriage for guiding a tooling system or a control system of a working machine.

Therefore, there is still a need to improve control devices used in press-bending machines or, more generally, in machines for working materials which are affected by limitation and shortcoming similar to those described above.

### DISCLOSURE OF INVENTION

### Object/scope of the invention

In view of the above drawbacks of the prior art, the present invention intends to overcome the existing disadvantages by providing an improved carriage of the type used to move cameras or measuring devices which is equipped with an anti-collision system. This carriage is mounted on machine tools, preferably bending presses machines.

Accordingly, it is a first object of the present invention to provide a novel carriage for driving inline control systems of machining operations to be made with machine tools. Said carriage is equipped with an anti-collision system to prevent, or at least mitigate, damage to the operator or to the machine itself in the event the carriage collides with a limb of the operator or with parts of the machine tool during standard machining operations. In particular, the main purpose of the present invention includes to provide an anti-collision system for a mobile carriage with a device (e.g. a camera) mounted on it which is used during inline control of the bending angle in a press-bending machine of any type.

A second important object of the present invention is to provide a carriage equipped with an anti-collision device which is reliable and able to provide a rapid feedback which prevents machine downtime.

In addition, a third important object of the present invention is to provide a carriage equipped with an anti-collision device that can operate beyond the current parameters of use and at the same time maintain conditions of total safety for the operator and for the machine tool as set forth by safety standards (e.g. UNI EN 12445 standard). In particular, this purpose includes: first, the possibility of moving the carriage along the guiding rail at a higher speed than that achieved by carriages mounted in tool machines currently known in the state of the art (about 50 mm/s); second, the possibility to prevent the activation of the standard safety system mounted on the machine tool (e.g. the clutch mounted on the electric motor), so that this safety system is redundant and can be removed from the machine for cost-cutting.

Furthermore, a fourth object of the present invention is to provide a carriage equipped with an anti-collision device which can be mounted on any machine tools which require control or measurement devices moved by a carriage along a guiding rail, or, more generally, which require systems to move actuators or other devices along one or more axes.

Finally, a last object of the present invention is to provide a carriage equipped with an anti-collision device for machine tools which can be implemented by means of known technologies and at low costs.

Additional objects and advantages of the invention will be set forth in part in the detailed description which follows and in part will be obvious from the description or may be learned by practice of the invention.

### Technical Solution

These and still other purposes, which will appear more clearly below, are achieved by a carriage equipped with an anti-collision system for moving a measuring device, preferably a video camera, mounted on a machine tool and in particular on a press-bending machine.

The invention is defined in the appended independent claims while advantageous features are set forth in the appended dependent claims. The aforesaid claims, to which reference should be made, are hereinafter specifically defined and are intended as an integral part of the present description.

The inventive concept underlying the present invention consists in the combination of a carriage having a camera (or other suitable measuring/artificial vision device) mounted thereon and an anti-collision system integral with the carriage. Said anti-collision system includes a damping unit which can accumulate or dissipate the kinetic energy of the carriage in the event of a collision with the operator or with components of the machine tool, preferably a press brake. In this way it is possible to avoid, or at least limit, injuries to the operator or damages to the machine.

The practical implementation of the inventive concept has required a long and non-trivial development activity which encompasses the following technical problems: first, re-engineering conventional carriages which are mounted on machine tools, particularly press brakes; second, understanding and implementing the UNI EN12445 standard; finally, developing an anti-collision system which can reconcile safety and productivity (i.e. effectively accumulate or dissipate the kinetic energy of the carriage and at the same time prevent machine stops), taking into account the overall dimensions and requirements of conventional carriages.

### Brief description of drawings

The present invention will be more fully understood by reference to the following drawings which are for illustrative purposes only:

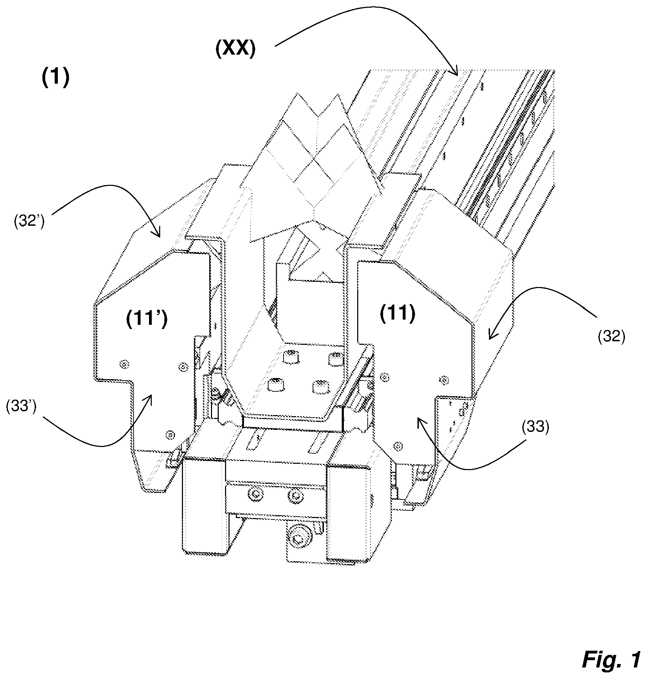

- Figure 1 shows the carriage equipped with an anti-collision device mounted on a press-bending machine according to the first embodiment of the present invention. The carriage is complete with casing and it is in a rest position;
- Figure 2 shows in (a) and (b) perspective views of the two distinct parts of the carriage of Figure 1. In this case, the carriage does not have casing;

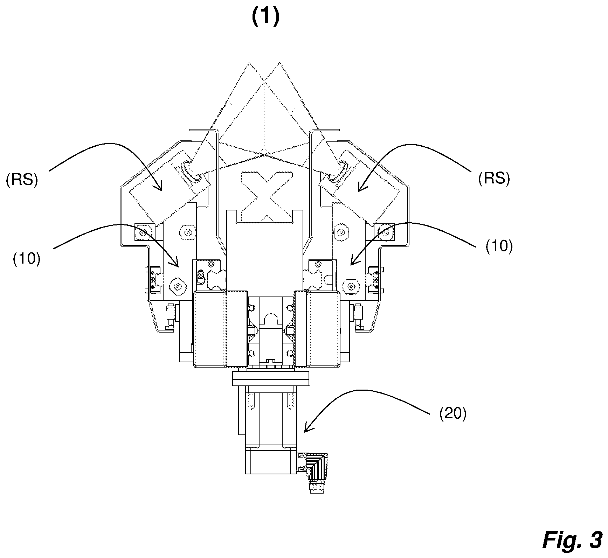

- Figure 3 is a front view of the carriage of Figure 1. The view is taken from the rear side facing the center of the V-die;

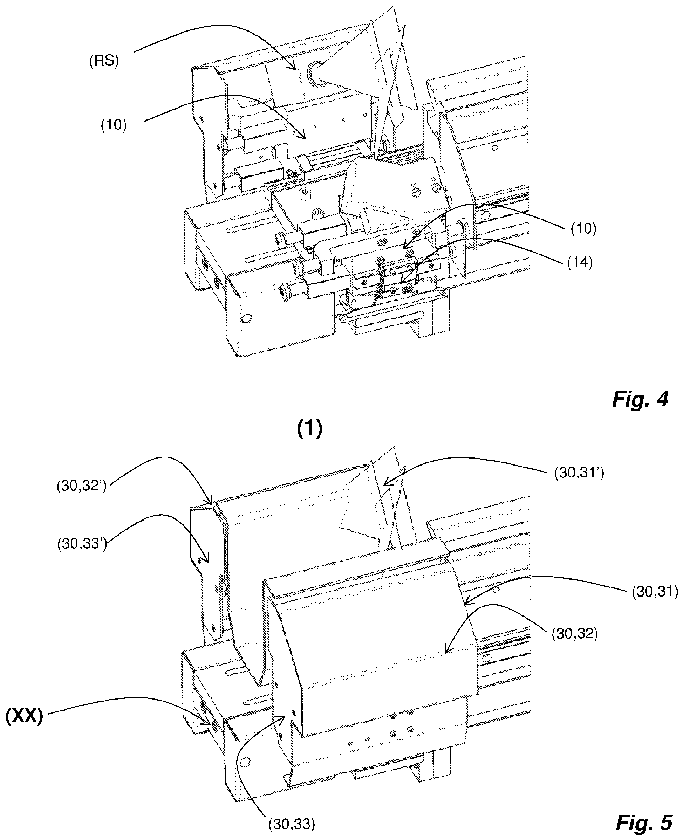

- Figure 4 depicts a perspective view of the carriage of Figure 1 in which one of the two parts of the carriage body is shown in section;
- Figure 5 depicts a perspective view of the carriage of Figure 1;
- Figure 6 shows a detail of the damping unit of the carriage of Figure 1 with a detail view of a spring seat and a spring centering pin;
- Figure 7 depicts the force/time diagram according to the UNI EN12445 standard;
- Figure 8 presents the experimental results of the performance of the carriage according to the present invention which demonstrate full compliance with the EN12445 standard.

These figures illustrate and demonstrate various features and embodiments of the present invention but are not to be construed as limiting the invention.

### DETAILED DESCRIPTION OF THE INVENTION

The main subject of the present invention is to provide a carriage (1) for guiding a tooling system or a control system of a working machine, comprising:
- a carriage body (10) having a system (RS) mounted thereon, said system suitable for performing on a workpiece a machining process or for controlling one or more dimensional parameters of a workpiece;
- a motion transmission unit (20) for transmitting to said carriage body (10) the motion of a motor along a path suitable for performing or controlling a machining process on said workpiece with said working machine,

The carriage (1) is characterized in that:
- said carriage body (10) has a system (RS) mounted thereon, said system (RS) suitable for controlling one or more dimensional parameters of a workpiece, said system (RS) being in the form of a detection system (RS) mounted on said carriage body (10) by means of a mounting element, said detection system (RS) suitable for controlling one or more parameters of the machining processes performed by said working machine, said carriage body being slidingly fixed to a guide rail (XX) which defines a direction, preferably identified with the axis (Z), suitable for controlling said one or more processing parameters;
- one or more casing elements (30) for protecting said carriage (1) during motion or in a rest condition or also in a parking position, said one or more casing elements (30) comprising front panels (31,31'), lateral panels (32,32') and rear panels (33,33'), mechanically connected to each other to form a box which moves integrally with said carriage body (10);
- alignment means (14) suitable to constrain the movement of said lateral panels (32,32') along the axis (Z) in a condition of collision of said carriage (1) with the operator or said working machine.

Furthermore, the carriage (1) is also characterized in that it includes an anti-collision system (AS) comprising a damping unit (40) having:
- at least one elastic component (41) arranged parallel to said guide rail (XX) in a suitable seat (42) by means of corresponding centering pins (45) machined on, or applied to, the body (10) of said carriage (1);
- at least one microswitch (44) which can be activated by the movement of said at least one elastic component (41), said microswitch (44) being connected to the control unit for signaling to said control unit an impact condition of the carriage (1) and therefore allowing the carriage (1) to stop.

The system (RS) can support machining operations or control machining operations performed by a machine tool. Preferably the system (RS) is integrated with the machine tool but can also constitute a separate unit. Said system (RS) is a detection system (RS) suitable to control machining operations performed by a machine tool. As a non-limiting example, the detection system (RS) includes: a camera, or other artificial vision system, a measuring device, contact or contact-less, which is able to detect one or more parameters of the machining operations performed by the machine tool having the mobile carriage (1) mounted thereon.

Detection systems (RS) comprising combinations of vision systems and/or measurement devices are also possible.

Even more preferably, the machine tool is a bending press and the machining parameter is the bending angle which is inline monitored by moving the carriage (1) along an axis parallel to the bending direction and generally identified with the Z axis.

However, the type of machining parameter being controlled and the type of machine tool having the carriage (1) the mounted thereon, it is not relevant for the purpose of implementing the present invention.

To this purpose, the relevant aspects are the following: first, the control of the machining operations involves the movement of the system (RS) on a mobile carriage along one or more axes with a relevant kinetic energy; second, the movement of the carriage can interfere with the operator or with parts of the machine tool.

Indeed, it is not even necessary that the carriage (1) equipped with the anti-collision system according to the present invention is exclusively used for moving a detection or measurement system (RS). More generally, said carriage can be mounted on any machine tool including a mobile carriage used for moving manipulators or tools whose movement is triggered by a control unit according to a variation of the kinetic energy of the carriage.

The motion transmission unit (20) includes appropriate kinematics which adapts and transmits to the carriage body (10) the motion of a motor along a direction suitable for controlling said machining parameters. Preferably, the motor is a rotary type electric actuator and it is external to the carriage even though it can also be integrated with the carriage itself.

The damping unit (40) comprises a system which during an impact is able to absorb the kinetic energy of the carriage and of the detection system (RS), and it is able to prevent that the kinetic energy is transferred to the limbs of the operator or to other parts of the machine tool. For this purpose, said device includes elastic components, dissipative components, or a combination thereof. In the first case, the kinetic energy of the carriage is accumulated in the damping unit (40) and subsequently transferred so as to prevent injury to the operator or damage to the machine tool. As a non-limiting example, useful technologies for making a damping unit of this type can be one or more springs or a piston. In the second case, the kinetic energy of the carriage is dissipated, for example, by materials such as viscoelastic elastomers or by devices known as viscoelastic dissipators.

The control unit is based on an encoder and on known types of actuators. In the event of a collision with the operator or the machine tool, the control unit has to operate promptly to stop the motion of the carriage (1) and avoid further damage, for example by moving the carriage away from the point of impact.

As mentioned, the anti-collision system has been conceived and used with a camera carriage not only to prevent damages related to the relevant kinetic energy of the "carriage+camera system", but also to avoid machine downtime. In fact, in the event of a collision, the control system of the anti-collision system according to the present invention instantly stops the motion of the carriage and returns it to the parking position, thus allowing machining operations to be resumed without having to reset the press-bending machine.

As we mentioned, the carriage (1) equipped with an anti-collision system comprises:
- one or more casing elements (30) for protecting said carriage (1) during motion or in a rest condition or also in a parking position, said one or more casing elements (30) comprising front panels (31,31'), lateral panels (32,32') and rear panels (33,33'), mechanically connected to each other to form a box which moves integrally with said carriage body (10);
- alignment means (14) suitable to constrain the movement of said lateral panels (32,32') along the axis (Z) in a condition of collision of said carriage (1) with the operator or said working machine.

Thanks to these solutions machine downtimes and not only injuries or damage to the operator or machine tool can be avoided or limited. These advantages will appear more clearly from the description of three preferred but not exclusive embodiments, which will be described below by way of non-limiting example of the invention.

In particular, the first preferred embodiment refers to a carriage equipped with an anti-collision system applied to a standard press-bending machine, the second preferred embodiment refers to the application of said carriage to a different machine tool, and finally the third preferred embodiment concerns an actuator which is responsive to the variation of kinetic energy and it is characterized in that it comprises the carriage according to the invention. Other embodiments will appear obvious to those skilled in the art from the description provided below or from the practical implementation of the present invention.

### BEST MODE FOR CARRYING OUT THE INVENTION

Further characteristics and advantages of the invention will become apparent from the description of a preferred, but not exclusive, embodiment.

### First preferred embodiment

With reference to the accompanying figures, in a first preferred embodiment of the present invention, the carriage (1) equipped with the anti-collision system according to the present invention is mounted on a typical press-bending machine. Said carriage (1) includes:
- a carriage body (10) having a system (RS) mounted thereon for inline controlling the bending angle, said system (RS) being preferably in the form of a video camera (RS);
- a motion transmission unit (20) for transmitting to the carriage body (10) the motion of a rotary motor, external to said carriage (1), said motion being along a direction suitable for controlling the bending angle (usually identified with the "Z axis" according to conventions);
- one or more casing elements (30), preferably 4 elements, integral with said carriage, for the protection of said carriage body (10) both when it is in motion and when it is in a rest condition or also in a parking position;
- a damping unit (40) equipped with a system for absorbing or dissipating the kinetic energy of the carriage and the system (RS) during an impact condition and preventing said kinetic energy from being transferred to the operator or other parts of the working machine and thus causing injuries or damages;
- a control unit which in association with said damping unit (40) stops the motion of said carriage in the event of a collision with the operator or the working machine

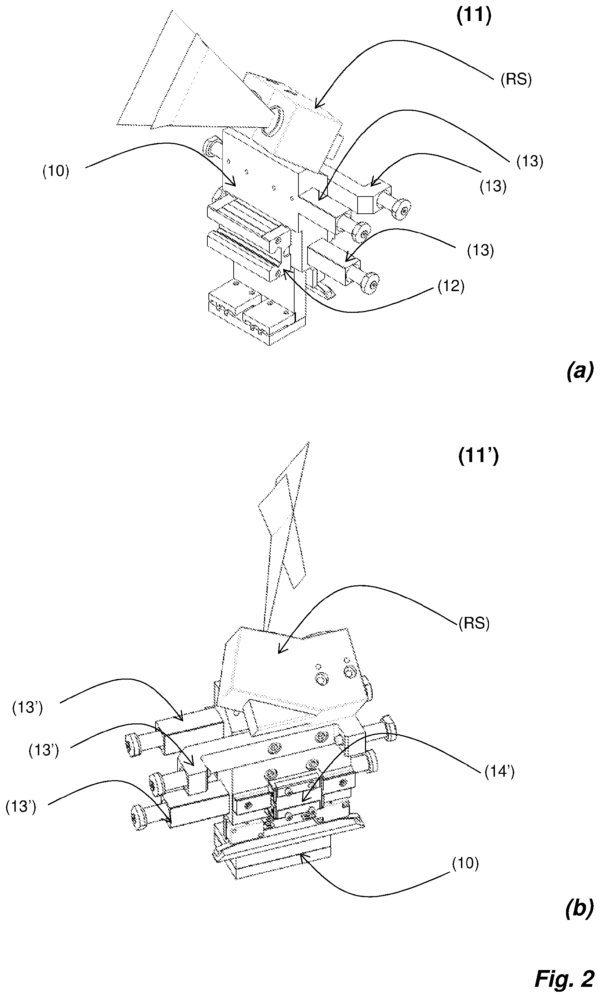

In this preferred embodiment, disclosed here by way of non-limiting example of the invention, the **carriage body (10)** is preferably formed by assembling two symmetric identical parts (11,11'). Each of said parts (11,11') comprises (Figure 2): a first guide (12,12'), fixing/centering elements (13,13'), a second guide (14,14') and support elements for the detection system (RS). Each of the first guides (12,12') has a prismatic shape, for example a dovetail shape, which matches the corresponding prismatic shape of the guide rail (XX). Therefore, when the first guides (12,12') are assembled to the guide rail (XX), the carriage body (10) is slidingly coupled with the guide rail (XX). Preferably, the guide rail (XX) is integral with the press-bending machine and it is directed along the axis (Z).

However, the carriage body (10) can also consist of a single shaped block slidingly coupled to the guide rail (XX) on which the carriage (1) moves.

Each of two symmetric identical parts (11,11') comprises second guides (14,14') which preferably are prismatic type guides. As it will be explained later, the second guides (14,14') constrain the movement of some casing elements (30) exclusively along the axis (Z) during a collision to prevent a block of the carriage on the guide rail (XX) and therefore a machine downtime. Advantageously, said second prismatic guide (14.14') is a miniaturized recirculation guide.

In the first preferred embodiment, described here by way of non-limiting example of the invention, the carriage (1) equipped with the anti-collision system comprises a motion transmission unit (20) which moves the carriage (1) along the guide rail (XX) by converting the rotary motion generated by an electric motor (not shown in the figure) and suitably fixed to the frame of the press-bending machine. Preferably, the motion transmission unit (20) is a reduction gear integral with the carriage body (10) and connected to the shaft of the electric motor by means of a standard belt and toothed wheel. Preferably said motor is an electric motor equipped with an encoder.

In the first preferred embodiment, described here by way of non-limiting example of the invention, the carriage (1) equipped with the anti-collision system comprises casing elements (30) which are integral with the anti-collision device. Said casing elements (30) protect the carriage body (10) and the detection system (RS), both in running condition and in rest or parking positions. Said casing elements (30) are preferably 6 elements, two front panels (31,31'), two lateral panels (32,32') and two rear panels (33,33'), mechanically connected to each other to form a box which moves integrally with said carriage body (10). To ensure that in the event of a collision the side panels (32,32') move along the axis (Z), they are slidingly constrained to the parts (11,11') of the carriage body (10) by means of the second guide (14,14'), which is preferably a miniaturized recirculation guide.

In the first preferred embodiment, herein described by way of non-limiting example, the carriage (1) equipped with the anti-collision system according to the present invention comprises a damping unit (40). Said damping unit (40) comprises a plurality of springs (41), which absorb the kinetic energy of the carriage (1) during a collision, and a plurality of microswitches (44), which stop the carriage (1) in association with the control unit to prevent or limit injuries or damages in the event of a collision.

Springs (41) are arranged parallel to the axis (Z) in suitable seats (42) by means of corresponding spring centering pins (45) machined on, or applied to, the body (10) of the carriage (1) so that one end of the spring is fixed and constrained to said carriage body (10), while the other end is fixed to a slider capable of sliding inside the seat integral with the lateral panels (32,32'). In turn, the movement of the cursor activates a microswitch (44) connected to the control unit.

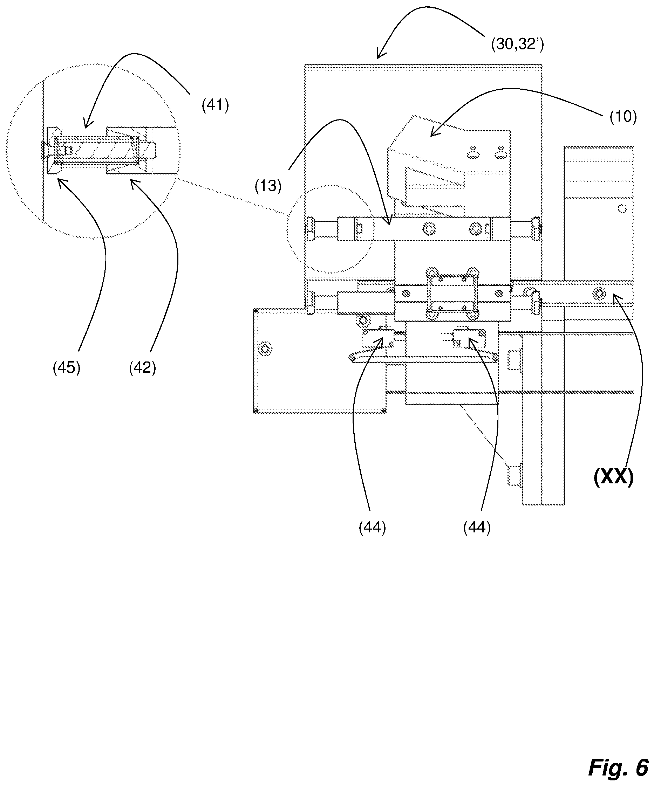

Advantageously, each seat (42) has a shape that prevent the spring (41) being ejected from its seat (42). A spring (42) ejection is a very infrequent event that may occur not so much during the use of the carriage (1) but in case the damping unit (40) is not properly assembled. Preferably, the seat has a conical shape like the one depicted in the attached Figure 6 by way of non-limiting example of the invention. However, other forms are possible.

It will be apparent to the skilled in the art that there are various design options to create a mechanism of this type. In particular, the options depends on the microswitch type and on the switch activation mode which can be contact or contact-less.

For example, it is preferable that the microswitch (44) is of the snap-type and is fixed to the carriage body (10) so as to be mechanically activated by the movement of the cursor. Alternatively, the microswitch (44) can be fixed to the cursor itself, or it can integrate the cursor in a single device, a configuration that it is suitable to the use of reed-type magnetic microswitches activated by a magnet suitably placed on the carriage body (10). Other equivalent solutions are however possible.

Preferably, said damping unit (40) comprises 12 calibrated springs (41) housed in as many seats (42) obtained laterally on the parts (11,11'). Preferably, each spring (41) is associated with a snap-type microswitch (44). However, the number of microswitches (44) may differ from that of the springs (41).

In the event of a collision of the carriage (1) with, for example, the operator's hand, the front panels (31,31') transfer the kinetic energy to the two lateral panels (32,32') and these in turn to the parts (11,11') of the carriage body (10) because they are slidingly constrained to the two lateral panels (32,32') by means of the miniaturized recirculation guide (14).

It is also possible that the operator's hand collides directly with the two lateral panels (32,32'). In any case, the movement of the parts (11,11') resulting from the impact causes: a compression of the springs (41) equal to ΔL, the displacement of the cursor and therefore the activation of one or more microswitches (44).

By properly dimensioning the springs, the control unit alerted by one or more microswitches (44) has enough time to stop the motion of the carriage (1) and make it move back before the springs reach the end-of-travel (taking into account the inertia of the carriage itself and the intrinsic response time of the control unit). Otherwise, the totally compressed springs (41) may transmit an high fraction of the absorbed kinetic energy of the carriage (1) which in turn is dangerously transferred to the limb of the operator or to the component of the press-bending machine which collides with the carriage. In order for the damping unit (40) to work correctly, springs are calibrated and chosen with proper length and elastic constant, so that the compression Δ*L*, proportional to the speed v of the carriage (1), is lower than the travel of the spring (in the case of a single spring such compression is given by $Δ L = \sqrt{m / k} {v}_{o}$ where m is the total mass of the carriage and k the elastic constant of the spring with negligible mass).

As previously mentioned, thanks to the miniaturized recirculation guide (14,14'), whatever the kinetics of the impact, the springs (41) are compressed uniformly for a length Δ*L* in a direction exclusively parallel to the axis (Z). Without this inventive solution, a carriage block and a machine downtime may occur because springs (41) flex obliquely and could be ejected from their seat (42) during a collision.

In the first preferred embodiment, described here by way of non-limiting example of the invention, the carriage (1) equipped with the anti-collision system comprises a control unit (not shown). Said control unit includes an encoder for reading the position of the carriage (1), and a switch to block the motion of the motor and hence the carriage.

From a functional point of view, by means of a computer program (SW) embedded in a firmware or stored in the memory unit of a computer, said control unit performs the following operations: the micro-switch detects the amount of compression of the spring (41); if this value is non-zero (i.e. a collision is occurring), the control unit activates a switch and reverses the motion of the carriage (1) so as to make it move back. The control unit also performs ancillary functions such as checking whether the anti-collision system mounted on the carriage (1) is properly functioning or not.

From the description provided, it will be apparent to those skilled in the art that by suitably sizing the anti-collision system herein described (for example by appropriately choosing the number, length and elastic constant of the springs), it is possible at the same time to: first, move the carriage at a speed higher than that of the press-bending machines currently known in the state of the art (which is about 50 mm/s); second, comply with the safety requirements imposed by the UNI EN12445 standard. This remarkable achievement obtained by the present inventor is demonstrated by the experimental results illustrated in the accompanying Figure 8. Furthermore, said anti-collision system allows to dissipate kinetic energy in a way that prevent the activation of the dynamometric clutch mounted on the motor that moves the carriage. In this way, the anti-collision system effectively acts as a protection system for the standard safety system mounted on the press-bending machine, thus preserving the life of the motor itself and providing a double-safety mechanism. Indeed, the use of the carriage equipped with the anti-collision system according to the present invention makes redundant the presence of the dynanometric clutch protection system required by safety standards. Therefore, thanks to the present invention, the degree of safety with respect to known press-bending machines has been further increased, thus achieving a further object of the present invention.

In spite of the apparent simplicity of the inventive concept, the practical implementation of the present invention involved the overcoming of non-trivial technical issues to identify the optimal solution between conflicting technical requirements.

The first issue concerns how to maximize the dissipation of kinetic energy, which requires a precise calculation of the center of gravity of the anti-collision system around the point where the kinetic energy is concentrated. In fact, it has been experimentally verified that the distribution of dynamic and static loads must be distributed on three axes: otherwise it is possible for the springs to be ejected from their seats (or the non-uniform compression along the Z axis or the springs in its seat), and hence the carriage block on the guide rail (XX) and finally a machine downtime.

A second issue related to the previous one, concerns the choice, sizing and positioning of the springs which must fulfill conflicting requirements. On one hand they should be of reduced size and mass to reduce the inertia of the carriage and increase the response of the anti-collision system, while on the other hand they should be of an adequate length to adequately absorb the kinetic energy of the carriage.

A third issue concerns the precision in mechanical machining which must be centesimal, in particular at the level of coupling of the driving rail. This requirement led to the design of a carriage body with a "minimal" structure, taking into account the need to reduce the costs of the anti-collision system to facilitate its adoption and diffusion.

### CONCLUSIONS

To conclude, it has been found that the carriage equipped with the anti-collision system device hereinabove described fully achieves the intended aim and objects.

It is understood that the invention is not limited to the exemplary embodiments shown and described herein and although the description and examples provided contain many details, these should not be construed as limiting the scope of the invention but simply as illustrative illustrations of some embodiments of the present invention. In fact, it will be apparent to a skilled person in this field that numerous variants are possible all falling within the same inventive concept. Therefore, any modification of the present invention which falls within the scope of the following claims is considered part of the present invention.

Where the characteristics and techniques mentioned in any claim are followed by reference signs, these reference marks have been applied solely for the purpose of increasing the intelligibility of the claims and consequently these reference marks have no limiting effect on the interpretation of each element identified by way of example from these reference signs.

## Claims

1. A carriage (1) for guiding a tooling system or a control system of a working machine, said carriage (1) comprising:
- a carriage body (10) having a system (RS) mounted thereon, said system suitable for controlling one or more dimensional parameters of a workpiece, said system (RS) being in the form of a detection system (RS) mounted on said carriage body (10) by means of a mounting element, said detection system (RS) suitable for controlling one or more parameters of the machining processes performed by said working machine, said carriage body being slidingly fixed to a guide rail (XX) which defines a direction, identified with an axis (Z), suitable for controlling said one or more processing parameters;
- a motion transmission unit (20) for transmitting to said carriage body (10) the motion of a motor along a path suitable for performing or controlling a machining process on said workpiece with said working machine;
- one or more casing elements (30) for protecting said carriage (1) during motion or in a rest condition or also in a parking position, said one or more casing elements (30) comprising front panels (31,31'), lateral panels (32,32') and rear panels (33,33'), mechanically connected to each other to form a box which moves integrally with said carriage body (10);
said carriage being **characterized in that** it further comprises:
- alignment means (14) suitable to constrain the movement of said lateral panels (32,32') along the axis (Z) in a condition of collision of said carriage (1) with the operator or said working machine, and
- an anti-collision system (AS) comprising:
- a damping unit (40) integrated in said carriage and equipped with a system for absorbing or dissipating the kinetic energy of the carriage and the system (RS) during an impact condition and preventing said kinetic energy from being transferred to the operator or other parts of the working machine and thus causing injuries or damages;
- a control unit which in association with said damping unit (40) stops the motion of said carriage in the event of a collision with the operator or the working machine,
the damping unit comprising:
- at least one elastic component (41) arranged parallel to said guide rail (XX) in a suitable seat (42) by means of corresponding centering pins (45) machined on, or applied to, the body (10) of said carriage (1);
- at least one microswitch (44) which can be activated by the movement of said at least one elastic component (41), said microswitch (44) being connected to the control unit for signaling to said control unit an impact condition of the carriage (1) and therefore allowing the carriage (1) to stop.

2. The carriage (1) according to claim 1 wherein said carriage body (10) is formed by assembling two distinct symmetric identical parts (11,11') which can be joined so as to form a single part slidably constrained to said guide rail (XX) by means of a first guide (12,12').

3. The carriage (1) according to claim 1 or 2 wherein said alignment means (14) is a miniaturized prismatic guide (14,14') applied to one of said lateral panels (32,32').

4. The carriage (1) according to one or more of the claims 1 to 3 wherein said microswitch (44) is:
- of the type selected from the group consisting of: snap-action microswitches, magnetic microswitches, reed microswitches, or a combination thereof; and
- applied to said body (10), to one of said lateral panels (32,32') of the carriage (1), to said spring (41), or to a combination thereof.

5. The carriage (1) according to one or more of the preceding claims 1 to 4 wherein said motor, preferably a rotary-type motor, is external to, or is integrated with, said carriage.

6. The carriage (1) according to one or more of the preceding claims 1 to 5 wherein said elastic component is a spring, a fluid cylinder/piston, or a combination thereof.

7. The carriage (1) according to one or more of the preceding claims 1 to 6 wherein said damping unit (40) further comprises dissipative components selected from the group consisting of: viscoelastic cylinders/pistons, dissipating or damping materials such as viscoelastic elastomers, viscoelastic dampers, magnetic brakes, or a combination thereof.

8. The carriage (1) according to one or more of the preceding claims 1 to 7 wherein said system (RS) is suitable for controlling one or more dimensional parameters of a workpiece and it is selected from the group consisting of: a video camera, an artificial vision system, a measuring device, or a combination thereof.

9. The carriage (1) according to one or more of the preceding claims 1 to 8 wherein said working machine is a press brake and said one or more dimensional parameters are: bending angle, bending direction, bending length, or a combination thereof.

10. A press brake **characterized in that** it comprises:
- the carriage (1) according to one or more of claims 1 to 9; and
- a motor for moving said carriage (1) along a path suitable for performing or controlling a machining process on said workpiece with said working machine.

11. A press brake according to claim 10 **characterized in that** said motor is associated with a safety device to stop the motion of said carriage (1) in a dangerous condition, said safety device being :
- a torque limiter, preferably equipped with a slip clutch, associated with the carriage (1) said torque limiter for increasing the safety level of said working machine and at the same time preserve the life of said motor.

## Patentansprüche

1. Schlitten (1) zum Führen eines Werkzeugsystems oder eines Kontrollsystems einer Arbeitsmaschine, wobei besagter Schlitten (1) Folgendes umfasst:
- einen Schlittenkörper (10), an dem ein System (RS) montiert ist, wobei besagtes System geeignet ist, einen oder mehrere Abmessungsparameter eines Werkstücks zu kontrollieren, wobei besagtes System (RS) in Form eines Erfassungssystems (RS) vorliegt, das mittels eines Montageelements an besagtem Schlittenkörper (10) montiert ist, wobei besagtes Erfassungssystem (RS) geeignet ist, einen oder mehrere Parameter der von besagter Arbeitsmaschine durchgeführten Bearbeitungsprozesse zu kontrollieren, wobei besagter Schlittenkörper gleitend an einer Führungsschiene (XX) befestigt ist, die eine mit einer Achse (Z) bezeichnete Richtung definiert, geeignet, die besagten ein oder mehreren Bearbeitungsparameter zu kontrollieren;
- eine Bewegungsübertragungseinheit (20) zum Übertragen der Bewegung eines Motors auf besagten Schlittenkörper (10) entlang eines Weges, der geeignet ist, einen Bearbeitungsprozess an besagtem Werkstück mit besagter Arbeitsmaschine durchzuführen oder zu kontrollieren;
- ein oder mehrere Gehäuseelemente (30) zum Schutz besagten Schlittens (1) während der Bewegung oder in einem Ruhezustand oder auch in einer Parkstellung, wobei die besagten ein oder mehreren Gehäuseelemente (30) vordere Paneele (31,31'), seitliche Paneele (32,32') und hintere Paneele (33,33') umfassen, die mechanisch miteinander verbunden sind, um einen Kasten zu bilden, der sich als Einheit mit besagtem Schlittenkörper (10) bewegt;
wobei besagter Schlitten (1) **dadurch gekennzeichnet ist, dass** er ferner Folgendes umfasst: ein Ausrichtmittel (14), das geeignet ist, die Bewegung der besagten seitlichen Paneele (32,32') entlang der Achse (Z) in einem Kollisionszustand besagten Schlittens (1) mit dem Bediener oder besagter Arbeitsmaschine zwangsweise zu führen, und ein Antikollisionssystem (AS), umfassend:
- eine Dämpfungseinheit (40), die in besagten Schlitten integriert und mit einem System ausgestattet ist, das dazu dient, die kinetische Energie des Schlittens und des Systems (RS) während eines Aufprallzustands zu absorbieren oder zu dissipieren und zu verhindern, dass besagte kinetische Energie auf den Bediener oder andere Teile der Arbeitsmaschine übertragen wird und dadurch Verletzungen oder Schäden verursacht;
- eine Steuereinheit, die in Verbindung mit besagter Dämpfungseinheit (40) die Bewegung besagten Schlittens im Falle einer Kollision mit dem Bediener oder der Arbeitsmaschine anhält,
wobei die Dämpfungseinheit (40) Folgendes umfasst:
- mindestens ein elastisches Bauteil (41), das parallel zu besagter Führungsschiene (XX) in einem geeigneten Sitz (42) mittels entsprechender Zentrierstifte (45) angeordnet ist, die am Körper (10) besagten Schlittens (1) angearbeitet oder daran angebracht sind;
- mindestens einen Mikroschalter (44), der durch die Bewegung des besagten mindestens einen elastischen Bauteils (41) aktiviert werden kann, wobei besagter Mikroschalter (44) mit der Steuereinheit verbunden ist, um besagter Steuereinheit einen Aufprallzustand des Schlittens (1) zu signalisieren und somit das Anhalten des Schlittens (1) zu ermöglichen.

2. Schlitten (1) nach Anspruch 1, wobei besagter Schlittenkörper (10) durch Zusammenfügen von zwei gesonderten symmetrischen identischen Teilen (11,11') gebildet ist, die so verbunden werden können, dass sie ein einziges Teil bilden, das mittels einer ersten Führung (12,12') gleitend an besagter Führungsschiene (XX) zwangsgeführt ist.

3. Schlitten (1) nach Anspruch 1 oder 2, wobei besagtes Ausrichtmittel (14) eine miniaturisierte Prismenführung (14,14') ist, die an einem der besagten seitlichen Paneele (32,32') angebracht ist.

4. Schlitten (1) nach einem oder mehreren der Ansprüche 1 bis 3, wobei besagter Mikroschalter (44):
- von einem Typ ist, der ausgewählt ist aus der Gruppe bestehend aus: Schnappmikroschaltern, magnetischen Mikroschaltern, Reed-Mikroschaltern oder einer Kombination davon; und
- an besagtem Körper (10), an einem der besagten seitlichen Paneele (32,32') des Schlittens (1), an besagter Feder (41) oder an einer Kombination davon angebracht ist.

5. Schlitten (1) nach einem oder mehreren der vorhergehenden Ansprüche 1 bis 4, wobei besagter Motor, vorzugsweise ein Motor vom Rotationstyp, außerhalb besagten Schlittens angeordnet oder in besagten Schlitten integriert ist.

6. Schlitten (1) nach einem oder mehreren der vorhergehenden Ansprüche 1 bis 5, wobei besagtes elastisches Bauteil eine Feder, ein Fluidzylinder/-kolben oder eine Kombination davon ist.

7. Schlitten (1) nach einem oder mehreren der vorhergehenden Ansprüche 1 bis 6, wobei besagte Dämpfungseinheit (40) ferner dissipative Komponenten umfasst, die ausgewählt sind aus der Gruppe bestehend aus: viskoelastischen Zylindern/Kolben, dissipierenden oder dämpfenden Materialien wie viskoelastischen Elastomeren, viskoelastischen Dämpfern, Magnetbremsen oder einer Kombination davon.

8. Schlitten (1) nach einem oder mehreren der vorhergehenden Ansprüche 1 bis 7, wobei besagtes System (RS) geeignet ist, einen oder mehrere Abmessungsparameter eines Werkstücks zu kontrollieren, und ausgewählt ist aus der Gruppe bestehend aus: einer Videokamera, einem System für künstliches Sehen, einer Messvorrichtung oder einer Kombination davon.

9. Schlitten (1) nach einem oder mehreren der vorhergehenden Ansprüche 1 bis 8, wobei besagte Arbeitsmaschine eine Abkantpresse ist und die besagten ein oder mehreren Abmessungsparameter Folgende sind: Biegewinkel, Biegerichtung, Biegelänge oder eine Kombination davon.

10. Abkantpresse, **dadurch gekennzeichnet, dass** sie Folgendes umfasst:
- den Schlitten (1) nach einem oder mehreren der Ansprüche 1 bis 9; und
- einen Motor zum Bewegen besagten Schlittens (1) entlang eines Weges, der geeignet ist, einen Bearbeitungsprozess an besagtem Werkstück mit besagter Arbeitsmaschine durchzuführen oder zu kontrollieren.

11. Abkantpresse nach Anspruch 10, **dadurch gekennzeichnet, dass** besagter Motor einer Sicherheitsvorrichtung zum Anhalten der Bewegung besagten Schlittens (1) in einem Gefahrenzustand zugeordnet ist, wobei besagte Sicherheitsvorrichtung ein Drehmomentbegrenzer ist, der vorzugsweise mit einer Rutschkupplung ausgestattet ist und der besagtem Schlitten (1) zugeordnet ist, wobei besagter Drehmomentbegrenzer dazu dient, das Sicherheitsniveau besagter Arbeitsmaschine zu erhöhen und gleichzeitig die Lebensdauer besagten Motors zu erhalten.

## Revendications

1. Chariot (1) pour guider un système d'outillage ou un système de contrôle d'une machine de travail, ledit chariot (1) comprenant :
- un corps de chariot (10) sur lequel est monté un système (RS), ledit système étant apte à contrôler un ou plusieurs paramètres dimensionnels d'une pièce à usiner, ledit système (RS) se présentant sous la forme d'un système de détection (RS) monté sur ledit corps de chariot (10) au moyen d'un élément de montage, ledit système de détection (RS) étant apte à contrôler un ou plusieurs paramètres des processus d'usinage effectués par ladite machine de travail, ledit corps de chariot étant fixé de manière coulissante à un rail de guidage (XX) qui définit une direction, identifiée par un axe (Z), apte à contrôler lesdits un ou plusieurs paramètres d'usinage ;
- une unité de transmission du mouvement (20) pour transmettre audit corps de chariot (10) le mouvement d'un moteur le long d'une trajectoire apte à effectuer ou à contrôler un processus d'usinage sur ladite pièce à usiner avec ladite machine de travail ;
- un ou plusieurs éléments de carter (30) pour protéger ledit chariot (1) pendant le mouvement ou dans une condition de repos ou encore dans une position de stationnement, lesdits un ou plusieurs éléments de carter (30) comprenant des panneaux avant (31,31'), des panneaux latéraux (32,32') et des panneaux arrière (33,33'), reliés mécaniquement les uns aux autres pour former un caisson qui se déplace solidairement avec ledit corps de chariot (10) ;
ledit chariot (1) étant **caractérisé en ce qu'**il comprend en outre : un moyen d'alignement (14) apte à contraindre le mouvement desdits panneaux latéraux (32,32') le long de l'axe (Z) dans une condition de collision dudit chariot (1) avec l'opérateur ou ladite machine de travail, et un système anticollision (AS) comprenant :
- une unité d'amortissement (40) intégrée dans ledit chariot et équipée d'un système pour absorber ou dissiper l'énergie cinétique du chariot et du système (RS) pendant une condition d'impact et pour empêcher que ladite énergie cinétique soit transférée à l'opérateur ou à d'autres parties de la machine de travail et provoque ainsi des blessures ou des dommages ;
- une unité de commande qui, en association avec ladite unité d'amortissement (40), arrête le mouvement dudit chariot en cas de collision avec l'opérateur ou la machine de travail,
l'unité d'amortissement (40) comprenant :
- au moins un composant élastique (41) disposé parallèlement audit rail de guidage (XX) dans un logement approprié (42) au moyen de pions de centrage correspondants (45) usinés sur le corps (10) dudit chariot (1), ou appliqués à ce corps ;
- au moins un microrupteur (44) qui peut être activé par le mouvement dudit au moins un composant élastique (41), ledit microrupteur (44) étant relié à l'unité de commande pour signaler à ladite unité de commande une condition d'impact du chariot (1) et permettre ainsi l'arrêt du chariot (1).

2. Chariot (1) selon la revendication 1, dans lequel ledit corps de chariot (10) est formé par assemblage de deux parties distinctes symétriques identiques (11,11') qui peuvent être réunies de manière à former une partie unique contrainte de manière coulissante audit rail de guidage (XX) au moyen d'un premier guide (12,12').

3. Chariot (1) selon la revendication 1 ou 2, dans lequel ledit moyen d'alignement (14) est un guide prismatique miniaturisé (14,14') appliqué à l'un desdits panneaux latéraux (32,32').

4. Chariot (1) selon une ou plusieurs des revendications 1 à 3, dans lequel ledit microrupteur (44) est :
- du type choisi dans le groupe constitué par : les microrupteurs à action brusque, les microrupteurs magnétiques, les microrupteurs reed, ou une combinaison de ceux-ci ; et
- appliqué audit corps (10), à l'un desdits panneaux latéraux (32,32') du chariot (1), audit ressort (41), ou à une combinaison de ceux-ci.

5. Chariot (1) selon une ou plusieurs des revendications précédentes 1 à 4, dans lequel ledit moteur, de préférence un moteur de type rotatif, est extérieur audit chariot ou est intégré à celui-ci.

6. Chariot (1) selon une ou plusieurs des revendications précédentes 1 à 5, dans lequel ledit composant élastique est un ressort, un vérin/piston à fluide, ou une combinaison de ceux-ci.

7. Chariot (1) selon une ou plusieurs des revendications précédentes 1 à 6, dans lequel ladite unité d'amortissement (40) comprend en outre des composants dissipatifs choisis dans le groupe constitué par : les vérins/pistons viscoélastiques, les matériaux dissipatifs ou amortissants tels que les élastomères viscoélastiques, les amortisseurs viscoélastiques, les freins magnétiques, ou une combinaison de ceux-ci.

8. Chariot (1) selon une ou plusieurs des revendications précédentes 1 à 7, dans lequel ledit système (RS) est apte à contrôler un ou plusieurs paramètres dimensionnels d'une pièce à usiner et est choisi dans le groupe constitué par : une caméra vidéo, un système de vision artificielle, un dispositif de mesure, ou une combinaison de ceux-ci.

9. Chariot (1) selon une ou plusieurs des revendications précédentes 1 à 8, dans lequel ladite machine de travail est une presse plieuse et lesdits un ou plusieurs paramètres dimensionnels sont : l'angle de pliage, la direction de pliage, la longueur de pliage, ou une combinaison de ceux-ci.

10. Presse plieuse, **caractérisée en ce qu'**elle comprend :
- le chariot (1) selon une ou plusieurs des revendications 1 à 9 ; et
- un moteur pour déplacer ledit chariot (1) le long d'une trajectoire apte à effectuer ou à contrôler un processus d'usinage sur ladite pièce à usiner avec ladite machine de travail.

11. Presse plieuse selon la revendication 10, **caractérisée en ce que** ledit moteur est associé à un dispositif de sécurité pour arrêter le mouvement dudit chariot (1) dans une condition dangereuse, ledit dispositif de sécurité étant un limiteur de couple, de préférence équipé d'un embrayage à glissement, associé audit chariot (1), ledit limiteur de couple servant à augmenter le niveau de sécurité de ladite machine de travail et à préserver en même temps la durée de vie dudit moteur.
